# FASCICULE DE BREVET EUROPEEN

(11) **EP 2 091 769 B1**
(45) Date de publication et mention de la délivrance du brevet: **14.09.2011**
(21) Numéro de dépôt: 07872021.6
(22) Date de dépôt: 21.12.2007
(51) Int. Cl.: B60J 1/18, B60J 5/10

(54) **PROCEDE D'ASSEMBLAGE AVEC PRECISION D'UNE CHARNIERE SUR UN VITRAGE, CHARNIERE ET VITRAGE EQUIPE DE LA CHARNIERE.**
VERFAHREN ZUR GENAUEN KOPPLUNG EINES SCHARNIERS MIT EINER FENSTERVERGLASUNG, SCHARNIER UND MIT DEM SCHARNIER AUSGESTATTETE FENSTERVERGLASUNG
METHOD FOR ACCURATELY ASSEMBLING A HINGE WITH A WINDOW GLAZING, HINGE AND WINDOW GLAZING EQUIPPED WITH THE HINGE

(30) Priorité: 22.12.2006 FR 0655852
(43) Date de publication de la demande: 26.08.2009
(73) Titulaire: Saint-Gobain Glass France, 92400 Courbevoie (FR)
(72) Inventeur: LAMOUREUX, Laurent, F-60170 Ribecourt Dreslincourt (FR); DE PAOLI, Martial, F-60400 Cuts (FR); BREBION, Raymond, F-62280 Saint Martin Boulogne (FR)
(74) Mandataire: Jamet, Vincent
(86) Numéro de dépôt international: PCT/FR2007/052612
(87) Numéro de publication internationale: WO 2008/087353

(56) Documents cités:
- EP-A- 1 661 742
- EP-A1- 0 352 151
- EP-B1- 0 988 167
- DE-A1- 2 843 633

## Description

La présente invention se rapporte à un procédé d'assemblage d'un élément vitré, notamment un élément vitré bombé pour véhicule automobile, et d'au moins une, et de préférence deux, charnière(s) comportant chacune au moins une patte de fixation et une aile mobile par rotation autour d'un point P0 par rapport à la patte de fixation, ledit procédé comportant une étape préalable de positionnement dudit élément vitré dans un dispositif de montage puis une étape de positionnement de la (ou des) charnière(s) par rapport audit élément vitré et une étape finale de fixation de la (ou des) charnière(s) audit élément vitré.

Elle se rapporte également à un vitrage comportant un élément vitré, notamment un élément vitré bombé pour véhicule automobile, et se rapporte également à au moins une charnière en particulier pour ce vitrage, ladite charnière comportant au moins une patte de fixation et une aile mobile par rotation autour d'un point P0 par rapport à la patte de fixation.

La présente invention se rapporte aussi au vitrage obtenu par la mise en oeuvre du procédé.

Il est connu dans l'art antérieur de munir un vitrage et en particulier un vitrage de porte de coffre arrière de véhicule, d'au moins une, et en général deux, charnière(s) pour permettre l'ouverture de ce vitrage indépendamment de la porte qui le supporte.

Il est par exemple connu de la demande de brevet européen N° EP 988 167 un vitrage comportant un élément vitré et muni de deux charnières afin de permettre d'ouvrir le vitrage par rotation autour des points de rotation des charnières.

Un problème se pose toutefois lorsqu'une très grande précision sur le produit fini est requise après l'assemblage du vitrage au véhicule car aucun procédé industriel actuel de fabrication d'éléments vitrés ne permet d'atteindre la très grande précision requise, quelle que soit la nature de l'élément vitré.

Cette précision est en particulier difficile à atteindre lorsque l'élément vitré est en matière plastique moulée car le rapport entre la longueur de l'élément vitré et son épaisseur est tel qu'une déformation est toujours susceptible de se produire après le moulage, notamment lors du refroidissement, que l'élément vitré soit plan ou bombé c'est-à-dire non strictement plan.

Cette précision est également difficile à atteindre lorsque l'élément vitré comporte au moins une feuille de verre et en particulier lorsqu'il a subi au cours de son élaboration un traitement thermique par exemple de bombage et/ou de trempe.

Cette précision est particulièrement importante lorsque l'élément vitré est bombé et doit être monté dans un véhicule car cette précision joue un rôle majeur pour que l'étanchéité au bruit et aux fluides soit assurée une fois le vitrage monté dans la baie qu'il ferme. Il est ainsi souhaitable que la fixation de la (ou des) charnière(s) soit opérée avec la plus grande précision possible.

Cette précision dans la fixation de la (ou des) charnière(s) doit par ailleurs être suffisamment fiable pour permettre des milliers de mouvements autour de son (ou de leurs) point(s) de rotation.

Pour y parvenir, il est alors impératif de maîtriser tous les paramètres pouvant conduire à une perte de précision, à commencer par le procédé de fabrication de l'élément vitré.

Toutefois, il est très difficile d'augmenter encore la précision du moulage des éléments vitrés en matière plastique ou la précision de la phase de traitement thermique des éléments vitrés comportant au moins une feuille de verre, surtout lorsque l'élément vitré est constitué de plusieurs feuilles de verre ou autre matière (cas des vitrages feuilletés).

Une solution consiste ainsi à concevoir une charnière permettant de corriger l'essentiel des défauts lors de son installation sur l'élément vitré.

Toutefois, une difficulté majeure réside dans le fait qu'il n'est pas possible d'anticiper l'orientation des défauts à corriger et il convient alors de concevoir une charnière qui permettre de corriger des défauts quelle que soit leur orientation.

En outre, cette solution ne doit pas engendrer une perte de temps trop importante lors de l'assemblage de la charnière à l'élément vitré et ne doit pas engendrer de surcoût important.

L'art antérieur connaît de la demande de brevet européen N° EP 1 661 742 une solution qui tente de remédier à tous ces inconvénients. Chaque charnière du vitrage est munie d'une rotule dont une partie est intercalée entre une aile de la charnière et un élément vitré du vitrage.

Toutefois, la conception et l'assemblage de ces charnières est complexe car la rotule est en fait double, avec deux éléments à portée sphérique disposés de part et d'autre de l'élément vitré, chaque élément à portée sphérique coopérant avec une rondelle ou une coquille de forme similaire complémentaire.

En outre, selon ce document, cet assemblage complexe est fixé définitivement dans sa position adéquate sur la ligne générale d'assemblage des véhicules car il est expliqué que le serrage définitif et la fixation définitive n'est opéré qu'après que le vitrage ait été placé en position en l'appliquant sur des éléments adjacents de carrosserie.

Le but de l'invention est de pallier les inconvénients de l'art antérieur en proposant un procédé dans lequel l'assemblage de la (ou des) charnière(s) à l'élément vitré est opéré rapidement, à des cadences compatibles avec celles de la production amont de vitrages, sans avoir à multiplier le nombre de poste d'assemblage et tout en permettant de réaliser un assemblage très précis pour que l'ensemble ainsi assemblé présente la grande précision requise.

La présente invention se rapporte ainsi dans son acception la plus large à un procédé d'assemblage d'un élément vitré, notamment un élément vitré bombé pour véhicule automobile, et d'au moins une charnière selon la revendication 1. Les revendications dépendantes définissent des variantes préférées de réalisation.

Cette charnière comportant au moins une patte de fixation et une aile mobile par rotation autour d'un point P0 par rapport à la patte de fixation, ledit procédé comporte une étape préalable de positionnement dudit élément vitré dans un dispositif de montage puis une étape de positionnement de ladite charnière par rapport audit élément vitré et une étape finale de fixation de ladite charnière audit élément vitré, un moyen de compensation étant intercalé entre ladite aile et ledit élément vitré avant l'étape de fixation et ladite charnière étant positionnée sur le dispositif de montage uniquement par son point de rotation P0 de manière à pouvoir tourner par rapport à ce point autour du moyen de compensation pendant sa fixation à l'élément vitré.

Selon l'invention, c'est bien l'ensemble de la charnière constituée au moins de la patte de fixation et de l'aile mobile qui est fixé à l'élément vitré sur un dispositif de montage spécifique qui ne peut, bien sûr par nature, pas être la ligne générale de montage et d'assemblage des véhicules par le constructeur automobile, ni la carrosserie du véhicule qui transite sur cette ligne générale et au bout de laquelle le véhicule est terminé.

Ladite charnière, et de préférence chaque charnière dans le cas où le vitrage est muni de plusieurs charnières, est alors fixée audit élément vitré en prenant référence sur l'élément vitré.

Dans une variante, la (ou les) charnière(s) est (ou sont) fixée(s) audit élément vitré par un moyen de fixation tel qu'une vis, ce moyen traversant au moins en partie ledit élément vitré.

Bien que la charnière selon l'invention ait d'abord été développée pour des éléments vitrés supportant la réalisation de trous les traversant de part en part, du type vitrages moulés, il est tout à fait possible de fixer ledit moyen de compensation audit élément vitré par adhérence ou par collage, en particulier lorsque les éléments vitrés ne supportent pas la réalisation de trous les traversant de part en part.

Lorsque plusieurs charnières sont fixées sur un élément vitré, elles sont, de préférence, fixées avant retrait de l'élément vitré du dispositif de montage.

La présente invention se rapporte également à un vitrage comportant un élément vitré, notamment un élément vitré bombé pour véhicule automobile, et au moins une charnière, ledit vitrage étant notamment obtenu par la mise en oeuvre du procédé selon l'invention.

Ce vitrage comporte un élément vitré, notamment un élément vitré bombé pour véhicule automobile, et au moins une charnière, ladite charnière comportant au moins une patte de fixation et une aile mobile par rotation autour d'un point P0 par rapport à la patte de fixation, ce vitrage comportant en outre un moyen de compensation intercalé entre ladite aile et ledit élément vitré.

Ledit moyen de compensation est constitué d'une rotule présentant une face extérieure orientée vers ladite aile qui est bombée et qui coopère avec une face de forme similaire ménagée sur ladite aile. Cette forme similaire de l'aile qui fait face à la forme bombée de la face extérieure de la rotule fait ainsi partie intégrante de l'aile de la charnière et est creusée de manière complémentaire à la forme bombée de la face extérieure de la rotule.

Cette réalisation est particulièrement avantageuse car simple à fabriquer, peu onéreuse et simple à mettre en oeuvre, notamment dans le cadre du procédé selon l'invention.

Cette rotule comporte, de préférence, en son centre un trou pour le passage d'un moyen de fixation tel qu'une vis ; ladite aile comporte, de préférence, un trou pour le passage du moyen de fixation, ce trou étant ménagé dans la forme de l'aile bombée de manière similaire à la face extérieure de la rotule, de préférence en son centre axial ; ledit élément vitré comporte, de préférence, un trou pour le passage du moyen de fixation ; et ladite charnière comporte, de préférence, une embase présentant un trou pour le passage du moyen de fixation.

Le trou de ladite rotule présente, de préférence, un diamètre intérieur plus grand que le diamètre intérieur du trou de l'aile afin de laisser un jeu possible et le trou de l'aile présente une paroi intérieure qui pénètre dans le trou de la rotule sur au moins une partie de la hauteur du trou de la rotule et de préférence sur toute la hauteur du trou de la rotule afin de permettre d'opérer une fixation ferme de l'aile contre l'élément vitré grâce au moyen de fixation.

La rotule présente, par ailleurs de préférence, une face intérieure orientée vers ledit élément vitré qui est bombée et cette face intérieure orientée vers ledit élément vitré comporte, en outre de préférence, un retrait pour offrir encore plus de jeu.

La rotule est, de préférence, en matière plastique, et comporte une face extérieure orientée vers ladite aile et/ou une face intérieure orientée vers ledit élément vitré présentant un coefficient de frottement < 0,5 et de préférence ≤ 0,1.

Dans une variante, la rotule est ainsi entièrement en PTFE, le PTFE présentant normalement un coefficient de frottement ≤ 0,1.

Dans une variante, la rotule comporte un coeur plus dur que le PTFE (par exemple en polycarbonate) et est revêtue d'un revêtement de glissement présentant un coefficient de frottement < 0,5 et de préférence ≤ 0,1, par exemple en PTFE.

D'une manière alternative ou cumulative, il est également possible de prévoir que ladite aile et/ou ledit élément vitré est (ou sont) revêtu(s) d'un revêtement glissant présentant un coefficient de frottement < 0,5 et de préférence ≤ 0,1 au moins sur sa (ou leurs) paroi(s) en contact avec ledit moyen de compensation, en utilisant par exemple un film adhésif glissant recouvert sur une face de PTFE et sur l'autre d'un adhésif.

La présente invention se rapporte par ailleurs à une charnière pour un vitrage selon l'invention, cette charnière comportant au moins une patte de fixation, une aile mobile par rotation autour d'un point P0 par rapport à la patte de fixation et un moyen de compensation.

Dans une version de l'invention, la charnière comporte en outre, de préférence, une embase.

Avantageusement, la présente invention permet de fabriquer des vitrages équipés de charnières présentant des tolérances de fabrication très faibles à l'aide d'une opération d'assemblage extrêmement rapide s'intégrant très facilement dans le procédé de fabrication des vitrages, même lorsqu'ils sont bombés et/ou trempés.

Avantageusement également, la présente invention peut être mise en oeuvre avec tout type de vitrage, y compris les vitrages feuilletés.

Avantageusement en outre, la solution selon l'invention permet de maîtriser la coaxialité des axes de rotations de plusieurs charnières rapportées sur un même vitrage, même lorsque la zone de fixation d'une (ou de plusieurs) charnières au vitrage présente des défauts. Cette maîtrise est non seulement obtenue selon l'axe horizontal longitudinal de déplacement du véhicule, mais aussi selon l'axe horizontal transversal qui lui est perpendiculaire.

Avantageusement enfin, avec la solution selon l'invention, il n'est pas strictement nécessaire d'opérer un contrôle de côtes du vitrage avant l'opération d'assemblage de la ou des charnière(s) à l'élément vitré et l'assemblage du vitrage au véhicule sur la ligne générale de montage et d'assemblage des véhicules se trouve ainsi simplifié.

La présente invention sera mieux comprise à la lecture de la description détaillée ci-après d'exemples de réalisation non limitatifs et des figures ci-jointes :
- La figure 1 illustre une vue en coupe transversale d'un vitrage arrière de véhicule muni d'une variante d'une charnière selon l'invention ;
- La figure 2 illustre une vue de dessus de la rotule de compensation pour la variante de la figure 1 ;
- La figure 3 illustre une vue en coupe selon AA de la figure 2 ;
- La figure 4 illustre le positionnement d'une charnière de l'art antérieur, sans moyen de compensation ;
- La figure 5 illustre un exemple d'écart de galbe possible pour la configuration de la figure 4 ;
- La figure 6 illustre les conséquences de la configuration de la figure 5 pour le positionnement de la charnière de l'art antérieur de la figure 4, sans moyen de compensation ;
- La figure 7 illustre la rotation nécessaire de l'élément vitré pour mettre en contact toute la surface de contact de la charnière avec l'élément vitré ;
- La figure 8 illustre la mise en contact de l'élément vitré de la figure 7 avec un point de gâche en bas de l'élément vitré ;
- La figure 9 illustre l'écart de galbe et l'écart de contour observés après fixation définitive de la charnière de l'art antérieur, sans moyen de compensation ;
- La figure 10 illustre le positionnement d'une charnière selon l'invention, avec moyen de compensation ; et
- La figure 11 illustre le jeu engendré uniquement au niveau du moyen de fixation grâce au moyen de compensation et l'absence d'écart de galbe et d'écart de contour.

Il est précisé que les hachures n'ont pas été représentées sur toutes les figures afin d'en faciliter la lecture.

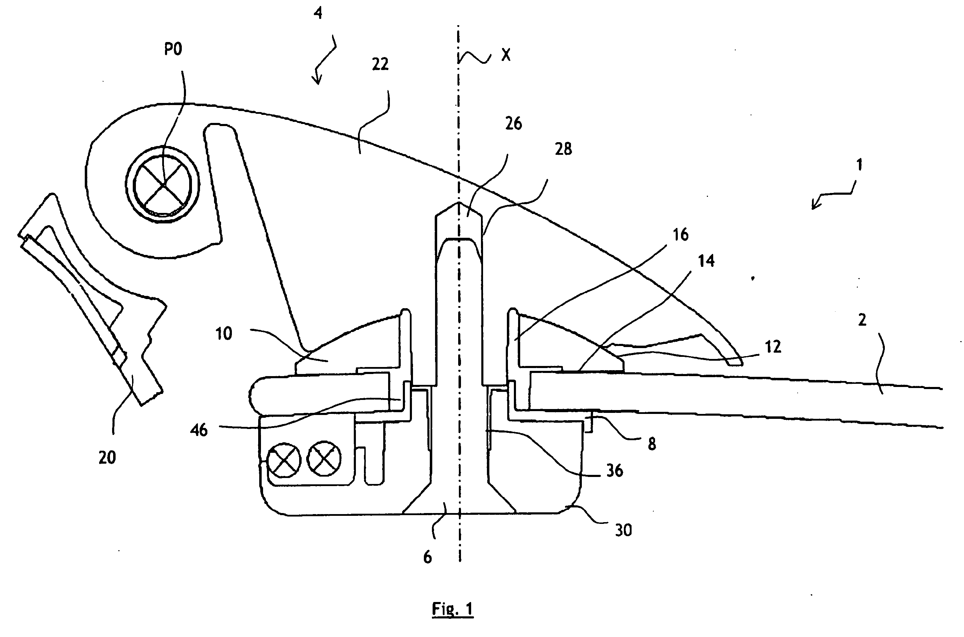

Le vitrage (1) selon l'invention illustré sur la figure 1 comporte un élément vitré (2), qui se trouve être ici une vitre arrière de véhicule automobile en verre bombé, et une charnière (4).

Le vitrage est en fait muni de deux charnières identiques pour permettre son ouverture par rapport à la porte arrière du véhicule qui le supporte, mais une seule est ici représentée.

La porte du véhicule possède par ailleurs au moins une, et de préférence deux, autres charnières pour son articulation sur le reste de la carrosserie du véhicule.

La charnière selon l'invention comporte une patte de fixation (20) pour sa fixation à la porte du véhicule et une aile (22) mobile par rotation autour d'un point P0 par rapport à cette patte de fixation (20). Cette patte de fixation et cette aile sont en alliage métallique, comme par exemple en alliage de Zinc (Zamak).

L'homme du métier utilise aussi les termes de « charnon fixe » et « charnon mobile » pour désigner respectivement cette patte de fixation et cette aile.

Le vitrage (1) selon l'invention est particulier en qu'il comporte un moyen de compensation intercalé entre ladite aile (22) et ledit élément vitré (2).

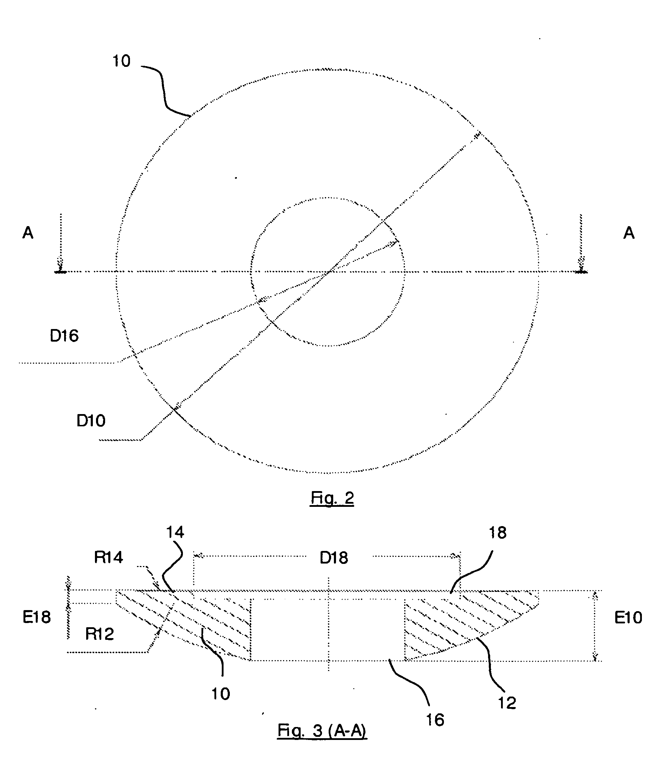

Dans l'exemple de réalisation illustré ici, ce moyen de compensation est constitué d'une rotule (10) qui se présente sous la forme d'une rondelle circulaire, non plate, visible sur les figures 2 et 3, présentant un axe central, une face extérieure (12) bombée, une face intérieure (14) bombée, c'est-à-dire se présentant sous la forme d'une portion de sphère.

Le diamètre extérieur D10 de la rotule est ici de 35 mm.

Cette rotule (10) est en matière plastique, et de préférence en PTFE.

La face extérieure (12), qui est orientée vers ladite aile (22), est bombée selon un rayon de courbure R12 de 30 mm et la face intérieure (14) qui est orientée vers ledit élément vitré (2) est bombée selon un rayon de courbure R14 sensiblement identique au rayon de courbure du vitrage au niveau de la fixation de la charnière. Ici R14 est d'environ 400 mm. Si le rayon de courbure du vitrage au niveau de la fixation de la charnière est proche de zéro ou zéro, R14 sera également proche de zéro ou zéro, c'est-à-dire que la face intérieure (14) sera plate.

La hauteur totale E10 de la rotule est ainsi d'environ 6,3 mm.

La face extérieure (12) bombée coopère avec une face de forme similaire et complémentaire en creux sur ladite aile.

Dans la version illustrée, l'élément vitré (2) est fixé contre l'aile (22) de la charnière à l'aide d'une embase (30) positionnée sur la face opposée de l'élément vitré par rapport à l'aile (22). L'élément vitré (2) est ainsi pris entre l'aile (22) et l'embase (30).

L'embase est en alliage métallique, comme la patte de fixation et l'aile, et une semelle (8) en matière plastique, par exemple en EPDM, est positionnée entre l'embase (30) et la face intérieure de l'élément vitré (2) afin d'éviter tout contact entre l'embase en alliage métallique et l'élément vitré.

Pour assurer le serrage de la prise, l'élément vitré (2), l'aile (22) et l'embase (30) sont munis chacun respectivement d'un trou circulaire (46, 26, 36) pour le passage d'une vis (6) et le trou (26) de l'aile présente sur sa paroi intérieur un filetage coordonné avec le filetage de la vis (6).

La rotule (10) comporte aussi en son centre un trou (16) circulaire, centré sur l'axe de la rotule, d'un diamètre intérieur D16 d'environ 13 mm pour le passage de la vis (6).

Le trou (16) de ladite rotule (10) présente un diamètre intérieur plus grand que le diamètre intérieur du trou (26) de l'aile (22) et le trou (26) de l'aile présente une paroi intérieure (28) qui pénètre dans le trou (16) de la rotule sur toute la hauteur du trou de la rotule, sans toutefois entrer en contact avec la paroi intérieure du trou (16).

La rotule (10) comporte par ailleurs sur sa face intérieure (14) orientée vers l'élément vitré (2) un retrait (18) circulaire, centré sur l'axe de la rotule, d'une hauteur E18 d'environ 1,5 mm et d'un diamètre D18 de 22 mm.

L'assemblage est opéré sur un dispositif de montage permettant le contrôle des tolérances sur l'ensemble du vitrage (1) muni de ses charnières.

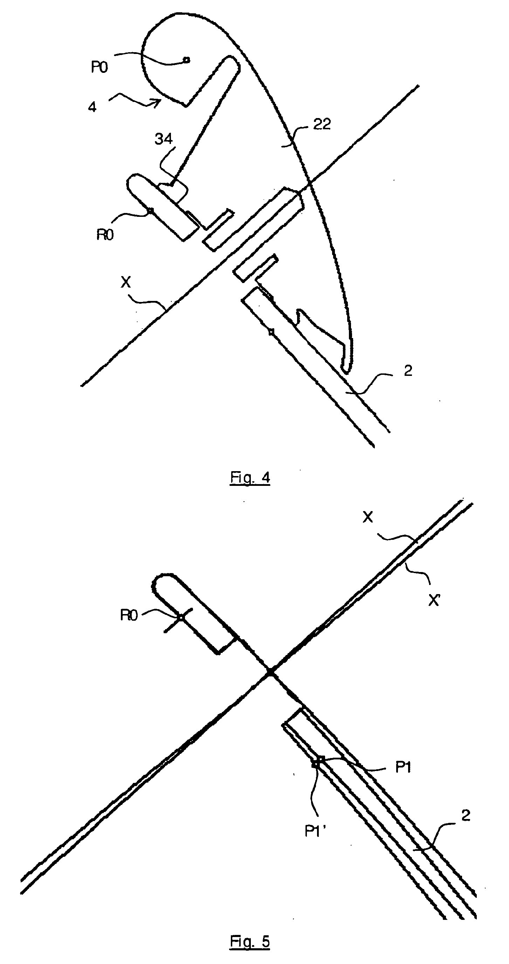

Les figures 4 à 9 illustrent le positionnement d'une charnière (4) comportant une patte de fixation (non représentée sur ces figures) pour sa fixation à la porte du véhicule et une aile (22) mobile par rotation autour d'un point P0 par rapport à cette patte de fixation sans toutefois interposition d'un moyen de compensation entre l'aile (22) et l'élément vitré (2).

L'aile (22) est munie d'une surface de contact (34) avec l'élément vitré (2) qui est fixe. Une semelle (non illustrée) en matière plastique, notamment en EPDM, est positionnée entre la surface de contact (34) et la face extérieure de l'élément vitré (2) afin d'éviter tout contact entre l'aile en alliage métallique et l'élément vitré.

Cette situation correspond ainsi à l'état de l'art antérieur à l'invention.

Pour la fixation de la charnière à l'élément vitré, ce dernier est positionné dans un dispositif de montage sur plusieurs points d'appui et en particulier le point d'appui R0, comme illustré sur les figures.

L'axe général de la fixation à la surface extérieure de l'élément vitré est représenté par l'axe X : il s'agit de l'axe du trou (26) à paroi filetée.

La variation de galbe observable au point P1 situé à l'opposé du point R0 par rapport à l'axe X de fixation est de +/- 1 mm.

La figure 5 illustre le décalage de l'axe X vers la position de l'axe X' lorsque l'on simule un galbe de - 1 mm (sous-galbe), représenté par un basculement par rapport au point d'appui R0 du point P1 vers le point P1'.

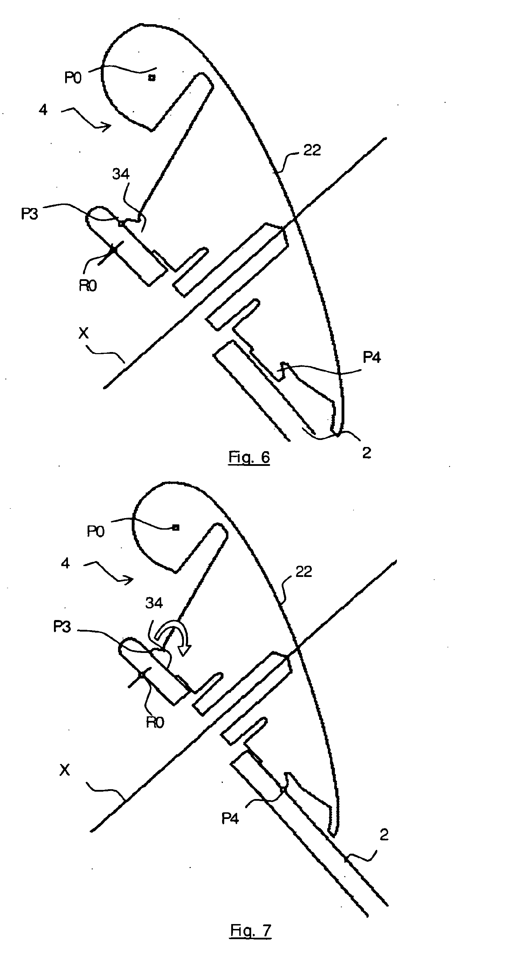

La figure 6 illustre les conséquences de ce basculement lors du positionnement de l'aile de la charnière : l'extrémité haute P3 de l'aile est en contact avec l'élément vitré au point P3, mais l'extrémité basse de l'aile P4, située à l'opposé du point P3 par rapport à l'axe X de fixation n'est pas en contact avec l'élément vitré.

Pendant l'opération de fixation de l'aile par rapport à l'élément vitré, pour mettre en contact le point P4 avec l'élément vitré, une rotation de l'élément vitré par rapport au point P3 s'opère, comme visible sur la figure 7.

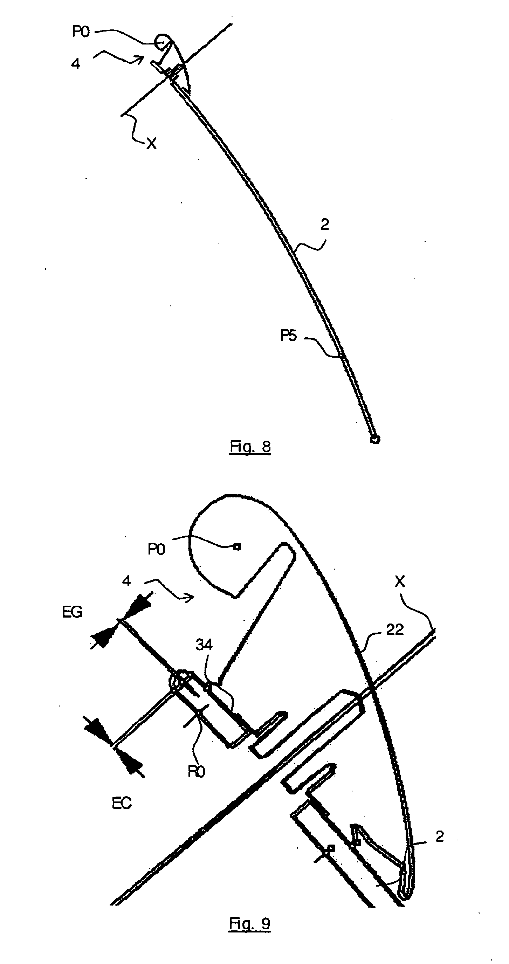

Toutefois, lorsque le vitrage est ensuite positionné dans le dispositif de montage et tourné autour du point P0 de manière à ce qu'il soit en contact avec un point à son extrémité basse, et en particulier un point P5 correspondant au point d'appui de la gâche, comme visible sur la figure 8, on constate alors l'existence, comme visible sur la figure 9, d'une part d'un écart de galbe EG de plusieurs dixièmes de millimètre et notamment de l'ordre de 0,35 mm et d'autre part d'un écart de contour EC également de plusieurs dixièmes de millimètre et en l'occurrence de l'ordre de 0,5 mm par rapport à la position nominale.

Ces écarts ne sont pas négligeables lorsqu'un positionnement très précis du vitrage est souhaité, en particulier pour réduire les turbulences acoustiques.

Lorsqu'une charnière (4) est fixée conformément à l'invention avec interposition d'un moyen de compensation entre l'aile (22) et l'élément vitré (2), les étapes illustrées aux figures 4 à 6 se déroulent de la même manière que dans l'art antérieur.

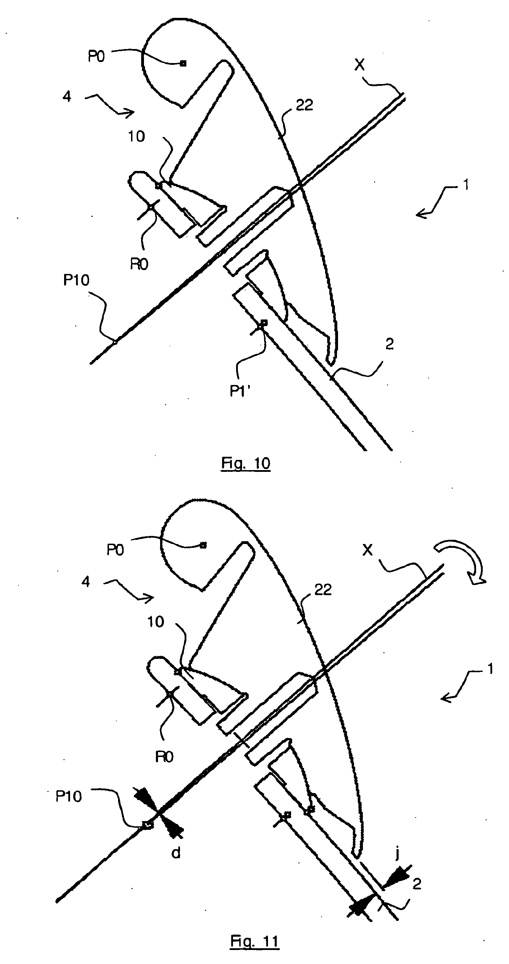

Toutefois, à la différence de ce qui est illustré aux figures 7 à 9 pour l'art antérieur, lorsqu'un moyen de compensation, constitué ici d'une rotule (10), est positionné entre l'aile (22) et l'élément vitré (2) avant l'étape de fixation, alors pendant l'opération de fixation de l'aile par rapport à l'élément vitré, pour que le point P4 entre en contact avec l'élément vitré, une double rotation s'opère simultanée, comme visible sur la figure 10 :
- d'une part une rotation de la rotule (10) dans son logement à l'intérieur de l'aile (22) autour de son point P10 de rotation afin de mettre toute la face (14) en contact avec la surface extérieure de l'élément vitré et
- d'autre part une rotation de l'aile (22) autour du point P0,
   la distance P0-P10 étant par ailleurs constante.

Cette double rotation engendre alors un décalage d d'environ 0,5 mm entre l'axe de fixation et l'axe de la rotule (10) au niveau de la face intérieure (14) de la rotule, ainsi qu'un jeu j entre la charnière et la surface extérieure de l'élément vitré augmenté d'environ 0,3 mm par rapport au nominal, comme visible en figure 11.

Toutefois, les conséquences de cet écart de jeu ne sont que de l'ordre esthétique et ne sont pas perceptibles pour l'oeil humain.

Les figures 10 et 11 illustrent ainsi l'assemblage selon l'invention de la charnière (4) sur l'élément vitré (2) à l'aide de la rotule (10) dont la face extérieure (14) est en contact avec l'élément vitré (2) en utilisant la flexibilité de positionnement offerte lorsque la rotule (10) est mobile avant fixation définitive par rapport à l'aile (22).

Du fait que lorsque la charnière est positionnée sur le dispositif de montage uniquement par son point de rotation P0 elle peut tourner par rapport ce point et autour du moyen de compensation pendant sa fixation à l'élément vitré (2) ; l'état et la forme des surfaces de contact d'une part entre l'aile et la rotule et d'autre part entre la rotule et l'élément vitré permettent de décaler l'axe de la rotule dans toute les positions souhaitable pour rattraper l'écart de galbe, comme illustré par la flèche double en figure 11.

Lorsque plusieurs charnières doivent être fixées sur l'élément vitré (2), elles sont fixées avant retrait de l'élément vitré (2) du dispositif de montage.

Dans la configuration envisagée ici chaque charnière est positionnée fixement par sa patte de fixation sur le dispositif de montage avant la fixation des charnières sur l'élément vitré, c'est-à-dire que le parallélisme entre les axes de rotation des charnières matérialisés par le point P0 est très exactement maîtrisé ; toutefois, l'aile de chaque charnière est, elle, mobile autour de P0 et autour de la rotule pendant la fixation.

Aucun écart de galbe ni écart de contour notable ne peut être observé après fixation complète de la (et des) charnière(s) lorsque le vitrage est encore dans le dispositif de montage, et bien sûr aussi ultérieurement.

Dans le cas de vitrage automobile, le constructeur automobile reçoit ainsi des vitrages avec charnières qu'il peut très facilement et très rapidement intégrer aux véhicules sur les lignes d'assemblage des véhicules, sans qu'il soit nécessaire de procéder à de longues et fastidieuses vérifications de centrage du vitrage et de parallélisme des axes des charnières sur chaque véhicule.

Dans une autre version de l'invention, non illustrée ici, l'élément vitré est fixé contre l'aile de la charnière sans l'aide d'une embase et aucun trou ne traverse l'élément vitré.

Dans cette version, le moyen de compensation peut se présenter sous une forme similaire à celle de la rotule (10), mais cette rotule est colée sur la face extérieure de l'élément vitré avant la fixation de la charnière en utilisant une technique de collage habituelle dans le domaine des vitrages.

Ce n'est que lorsque la charnière a été positionnée sur le dispositif de montage uniquement par son point de rotation P0 et qu'elle a été correctement orientée par rapport ce point autour du moyen de compensation que le moyen de fixation, constitué par exemple par une vis, peut-être introduit dans un trou correspondant de l'aile et venir coopérer avec un alésage complémentaire à l'intérieur de la rotule.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

Par exemple, l'homme du métier peut réaliser la patte de fixation, l'aile et l'embase de la charnière en matière plastique.

## Revendications

1. Procédé d'assemblage d'un élément vitré (2), notamment un élément vitré bombé pour véhicule automobile, et d'au moins une charnière (4) comportant au moins une patte de fixation (20) et une aile (22) mobile par rotation autour d'un point P0 par rapport à la patte de fixation (20), ledit procédé comportant une étape préalable de positionnement dudit élément vitré (2) dans un dispositif de montage puis une étape de positionnement de ladite charnière (4) par rapport audit élément vitré et une étape finale de fixation de ladite charnière audit élément vitré, **caractérisé en ce qu'**un moyen de compensation est intercalé entre ladite aile (22) et ledit élément vitré (2) avant l'étape de fixation et **en ce que** ladite charnière (4) est positionnée sur le dispositif de montage uniquement par son point de rotation P0 de manière à pouvoir tourner par rapport à ce point autour du moyen de compensation pendant sa fixation à l'élément vitré (2).

2. Procédé selon la revendication 1, **caractérisé en ce que** ladite charnière (4) est fixée audit élément vitré (2) en prenant référence sur l'élément vitré (2).

3. Procédé selon la revendication 1 ou la revendication 2, **caractérisé en ce que** ladite charnière (4) est fixée audit élément vitré (2) par un moyen de fixation tel qu'une vis (6), ce moyen traversant au moins en partie ledit élément vitré (2).

4. Procédé selon la revendication 1 ou la revendication 2, **caractérisé en ce que** ledit moyen de compensation est fixé audit élément vitré (2) par adhérence ou par collage.

5. Procédé selon l'une quelconque des revendications précédentes, **caractérisé en ce que** plusieurs charnières sont fixées sur un élément vitré (2) et **en ce qu'**elles sont fixées avant retrait de l'élément vitré (2) du dispositif de montage.

6. Vitrage (1) comportant un élément vitré (2), notamment un élément vitré bombé pour véhicule automobile, et au moins une charnière (4), ladite charnière comportant au moins une patte de fixation (20) et une aile (22) mobile par rotation autour d'un point P0 par rapport à la patte de fixation (20), un moyen de compensation étant intercalé entre ladite aile (22) et ledit élément vitré (2), **caractérisé en ce que** ledit moyen de compensation est constitué d'une rotule (10) présentant une face extérieure (12) orientée vers ladite aile qui est bombée et qui coopère avec une face de forme similaire complémentaire ménagée sur ladite aile.

7. Vitrage (1) selon la revendication 6, **caractérisé en ce que** ladite rotule (10) comporte en son centre un trou (16) pour le passage d'un moyen de fixation tel qu'une vis (6), **en ce que** ladite aile (22) comporte un trou (26) pour le passage du moyen de fixation, **en ce que** ledit élément vitré (2) comporte un trou (46) pour le passage du moyen de fixation et **en ce que** ladite charnière (4) comporte une embase (30) présentant un trou (36) pour le passage du moyen de fixation.

8. Vitrage (1) selon la revendication précédente, **caractérisé en ce que** le trou (16) de ladite rotule (10) présente un diamètre intérieur D16 plus grand que le diamètre intérieur du trou (26) de l'aile (22) et **en ce que** le trou (26) de l'aile présente une paroi intérieure (28) qui pénètre dans le trou (16) de la rotule sur au moins une partie de la hauteur du trou de la rotule et de préférence sur toute la hauteur du trou de la rotule.

9. Vitrage (1) selon l'une quelconque des revendications 6 à 8, **caractérisé en ce que** ladite rotule (10) présente une face intérieure (14) orientée vers ledit élément vitré (2) qui est bombée.

10. Vitrage (1) selon l'une quelconque des revendications 6 à 9, **caractérisé en ce que** ladite rotule (10) présente une face intérieure (14) orientée vers ledit élément vitré (2) qui comporte un retrait (18).

11. Vitrage (1) selon l'une quelconque des revendications 6 à 10, **caractérisé en ce que** ladite rotule (10) est en matière plastique et comporte une face extérieure (12) orientée vers ladite aile (22) et/ou une face intérieure (14) orientée vers ledit élément vitré (2) présentant un coefficient de frottement < 0,5 et de préférence ≤ 0,1.

12. Vitrage (1) selon l'une quelconque des revendications 6 à 11, **caractérisé en ce que** ladite aile (22) et/ou ledit élément vitré (2) est (ou sont) revêtu(s) d'un revêtement glissant présentant un coefficient de frottement < 0,5 et de préférence ≤ 0,1 au moins sur sa (ou leurs) paroi(s) en contact avec ledit moyen de compensation.

13. Charnière (4) pour un vitrage (1) selon l'une quelconque des revendications 6 à 12, comportant au moins une patte de fixation (20), une aile (22) mobile par rotation autour d'un point P0 par rapport à la patte de fixation (20) et un moyen de compensation, **caractérisée en ce que** ledit moyen de compensation est constitué d'une rotule (10) présentant une face extérieure (12) orientée vers ladite aile qui est bombée et qui coopère avec une face de forme similaire complémentaire ménagée sur ladite aile.

14. Charnière (4) selon la revendication précédente, **caractérisée en ce qu'**elle comporte en outre une embase (30).

## Claims

1. A method for assembling a glazed element (2), particularly a domed glazed element for a motor vehicle, and at least one hinge (4) comprising at least one fixing pad (20) and a flange (22) that can be moved by rotation about a point P0 relative to the fixing pad (20), said method comprising a prior step of positioning said glazed element (2) in a mounting device then a step of positioning said hinge (4) relative to said glazed element and a final step of fixing said hinge to said glazed element, **characterized in that** a compensation means is inserted between said flange (22) and said glazed element (2) before the fixing step and **in that** said hinge (4) is positioned on the mounting device only by its rotation point P0 so as to be able to rotate relative to this point about the compensation means during its attachment to the glazed element (2).

2. The method as claimed in claim 1, **characterized in that** said hinge (4) is fixed to said glazed element (2) by taking reference from the glazed element (2).

3. The method as claimed in claim 1 or claim 2, **characterized in that** said hinge (4) is fixed to said glazed element (2) by a fixing means such as a screw (6), this means passing at least partly through said glazed element (2).

4. The method as claimed in claim 1 or claim 2, **characterized in that** said compensation means is fixed to said glazed element (2) by adhesion or by bonding.

5. The method as claimed in any one of the preceding claims, **characterized in that** several hinges are fixed to one glazed element (2) and **in that** they are fixed before the glazed element (2) is removed from the mounting device.

6. A glazing unit (1) comprising a glazed element (2), particularly a domed glazed element for a motor vehicle, and at least one hinge (4), said hinge comprising at least one fixing pad (20) and a flange (22) that can be moved by rotation about a point P0 relative to the fixing pad (20), a compensation means being inserted between said flange (22) and said glazed element (2), **characterized in that** said compensation means consists of a swivel joint (10) having an outer face (12) oriented toward said flange that is domed and that interacts with a face of similar matching shape made on said flange.

7. The glazing unit (1) as claimed in claim 6, **characterized in that** said swivel joint (10) comprises, at its center, a hole (16) for a fixing means such as a screw (6) to pass through, **in that** said flange (22) comprises a hole (26) for the fixing means to pass through, **in that** said glazed element (2) comprises a hole (46) for the fixing means to pass through and **in that** said hinge (4) comprises a base (30) having a hole (36) for the fixing means to pass through.

8. The glazing unit (1) as claimed in the preceding claim, **characterized in that** the hole (16) of said swivel joint (10) has an internal diameter D16 that is greater than the internal diameter of the hole (26) of the flange (22) and **in that** the hole (26) of the flange has an inner wall (28) that enters the hole (16) of the swivel joint over at least a portion of the depth of the hole of the swivel joint and preferably over the whole depth of the hole of the swivel joint.

9. The glazing unit (1) as claimed in any one of claims 6 to 8, **characterized in that** said swivel joint (10) has an inner face (14) that is oriented toward said glazed element (2) and that is domed.

10. The glazing unit (1) as claimed in any one of claims 6 to 9, **characterized in that** said swivel joint (10) has an inner face (14) that is oriented toward said glazed element (2) and that comprises a recess (18).

11. The glazing unit (1) as claimed in any one of claims 6 to 10, **characterized in that** said swivel joint (10) is made of plastic and comprises an outer face (12) oriented toward said flange (22) and/or an inner face (14) oriented toward said glazed element (2) having a friction coefficient of <0.5 and preferably of ≤0.1.

12. The glazing unit (1) as claimed in any one of claims 6 to 11, **characterized in that** said flange (22) and/or said glazed element (2) is (or are) coated with a slippery coating having a friction coefficient of <0.5 and preferably of ≤0.1 at least over its (or their) wall(s) in contact with said compensation means.

13. A hinge (4) for a glazing unit (1) as claimed in any one of claims 6 to 12, comprising at least one fixing pad (20), a flange (22) that can be moved by rotation about a point P0 relative to the fixing pad (20) and a compensation means, **characterized in that** said compensation means consists of a swivel joint (10) having an outer face (12) oriented toward said flange that is domed and that interacts with a face of similar matching shape made on said flange.

14. The hinge (4) as claimed in the preceding claim, **characterized in that** it also comprises a base (30).

## Patentansprüche

1. Verfahren zum Verbinden eines Glaselements (2), insbesondere eines gewölbten Glaselements für Kraftfahrzeuge, und wenigstens eines Scharniers (4), das wenigstens eine Befestigungslasche (20) und einen durch Drehen um einen Punkt P0 gegenüber der Befestigungslasche (20) beweglichen Flügel (22) umfasst, wobei das Verfahren einen vorherigen Schritt zum Positionieren des Glaselements (2) in einer Montagevorrichtung, dann einen Schritt zum Positionieren des Scharniers (4) gegenüber dem Glaselement und einen abschließenden Schritt zum Befestigen des Scharniers an dem Glaselement umfasst, **dadurch gekennzeichnet, dass** zwischen dem Flügel (22) und dem Glaselement (2) vor dem Befestigungsschritt ein Ausgleichsmittel eingefügt wird und dass das Scharnier (4) an der Montagevorrichtung lediglich über seinen Drehpunkt P0 positioniert ist, derart, dass es sich während seiner Befestigung an dem Glaselement (2) gegenüber diesem Punkt um das Ausgleichsmittel drehen kann.

2. Verfahren nach Anspruch 1, **dadurch gekennzeichnet, dass** das Scharnier (4) unter Bezug auf das Glaselement (2) an dem Glaselement (2) befestigt wird.

3. Verfahren nach Anspruch 1 oder Anspruch 2, **dadurch gekennzeichnet, dass** das Scharnier (4) durch ein Befestigungsmittel, wie eine Schraube (6), an dem Glaselement (2) befestigt ist, wobei dieses Mittel das Glaselement (2) wenigstens teilweise durchgreift.

4. Verfahren nach Anspruch 1 oder Anspruch 2, **dadurch gekennzeichnet, dass** das Ausgleichsmittel durch Haftung oder durch Kleben an dem Glaselement (2) befestigt ist.

5. Verfahren nach einem der vorstehenden Ansprüche, **dadurch gekennzeichnet, dass** an einem Glaselement (2) mehrere Scharniere befestigt sind und dass sie vor dem Herausnehmen des Glaselements (2) aus der Montagevorrichtung befestigt werden.

6. Verglasung (1), die ein Glaselement (2), insbesondere ein gewölbtes Glaselement für Kraftfahrzeuge, sowie wenigstens ein Scharnier (4) umfasst, wobei das Scharnier wenigstens eine Befestigungslasche (20) und einen durch Drehen um einen Punkt P0 gegenüber der Befestigungslasche (20) beweglichen Flügel (22) umfasst, wobei zwischen dem Flügel (22) und dem Glaselement (2) ein Ausgleichsmittel eingefügt ist, **dadurch gekennzeichnet, dass** das Ausgleichsmittel von einem Kugelgelenk (10) gebildet ist, das eine dem Flügel zugewandte Außenseite (12) aufweist, die gewölbt ist und die mit einer an dem Flügel ausgebildeten Fläche ähnlicher ergänzender Form zusammenwirkt.

7. Verglasung (1) nach Anspruch 6, **dadurch gekennzeichnet, dass** das Kugelgelenk (10) in seiner Mitte ein Loch (16) für den Durchgang eines Befestigungsmittels, wie einer Schraube (6), aufweist, dass der Flügel (22) ein Loch (26) für den Durchgang des Befestigungsmittels aufweist, dass das Glaselement (2) ein Loch (46) für den Durchgang des Befestigungsmittels aufweist und dass das Scharnier (4) einen Fuß (30) umfasst, der ein Loch (36) für den Durchgang des Befestigungsmittels aufweist.

8. Verglasung (1) nach dem vorstehenden Anspruch, **dadurch gekennzeichnet, dass** das Loch (16) des Kugelgelenks (10) einen Innendurchmesser D16 aufweist, der größer als der Innendurchmesser des Loches (26) des Flügels (22) ist und dass das Loch (26) des Flügels eine Innenwandung (28) aufweist, die über wenigstens einen Teil der Höhe des Loches des Kugelgelenks und vorzugsweise über die gesamte Höhe des Loches des Kugelgelenks in das Loch (16) des Kugelgelenks eindringt.

9. Verglasung (1) nach einem der Ansprüche 6 bis 8, **dadurch gekennzeichnet, dass** das Kugelgelenk (10) eine dem Glaselement (2) zugewandte Innenseite (14) aufweist, die gewölbt ist.

10. Verglasung (1) nach einem der Ansprüche 6 bis 9, **dadurch gekennzeichnet, dass** das Kugelgelenk (10) eine dem Glaselement (2) zugewandte Innenseite (14) aufweist, die einen Rücksprung (18) umfasst.

11. Verglasung (1) nach einem der Ansprüche 6 bis 10, **dadurch gekennzeichnet, dass** das Kugelgelenk (10) aus Kunststoff besteht und eine dem Flügel (22) zugewandte Außenseite (12) und/oder eine dem Glaselement (2) zugewandte Innenseite (14) mit einem Reibungskoeffizienten < 0,5 und vorzugsweise ≤ 0,1 umfasst.

12. Verglasung (1) nach einem der Ansprüche 6 bis 11, **dadurch gekennzeichnet, dass** der Flügel (22) und/oder das Glaselement (2), wenigstens auf seiner (oder ihren) mit dem Ausgleichsmittel in Kontakt befindlichen Wand (Wänden) mit einer Gleitbeschichtung, die einen Reibungskoeffizienten < 0,5 und vorzugsweise ≤ 0,1 aufweist, versehen ist (oder sind).

13. Scharnier (4) für eine Verglasung (1) nach einem der Ansprüche 6 bis 12, umfassend wenigstens eine Befestigungslasche (20), einen durch Drehen um einen Punkt P0 gegenüber der Befestigungslasche (20) beweglichen Flügel (22) und ein Ausgleichsmittel, **dadurch gekennzeichnet, dass** das Ausgleichsmittel von einem Kugelgelenk (10) gebildet ist, das eine dem Flügel zugewandte Außenseite (12) aufweist, die gewölbt ist und die mit einer an dem Flügel ausgebildeten Fläche ähnlicher ergänzender Form zusammenwirkt.

14. Scharnier (4) nach dem vorstehenden Anspruch, **dadurch gekennzeichnet, dass** es ferner einen Fuß (30) umfasst.
